# EUROPEAN PATENT APPLICATION

(11) **EP 1 449 883 A1**
(43) Date of publication of application: **25.08.2004**
(21) Application number: 03075471.7
(22) Date of filing: 18.02.2003
(51) Int. Cl.: C08L 67/00

(54) **Polymer packaging layer with improved release properties**

(71) Applicant: Corus Technology BV, 1970 CA Ijmuiden (NL)
(72) Inventor: Spaans, Coenraad Jan, 1816 JV Alkmaar (NL); Waringa Cornelis Johannes, 1068 PL Amsterdam (NL); Hviid Lene, 1077 ZN Amsterdam (NL); Dommershuijzen Johannes Jacobus, 2071 VG Santpoort (NL)
(74) Representative: Herman de Groot, Johan Willem

(57) **Abstract**

Use of a polymer material made from a blend of a polyester resin and an apolar resin such as a polyolefin, as a material having improved non-stick properties as compared to a polymer material made from essentially the polyester resin.

## Description

The invention relates to improved release of a product from a contact surface such as the relevant contact surface of a packaging container or the like. When emptying packagings filled with a sticky product, release properties of the contact surface play an important role in view of economy, convenience and perception of a customer of how complete the packaging can be emptied.

In food packaging in metal containers, the packaging layer that provides the release properties conventionally is a lacquer applied to the metal, the metal being in the form of e.g. tinplate or in some cases tin free steel designated as TFS or ECCS (electrolytically chrome coated steel). To provide release properties to the inside of e.g. traditional internally lacquered fish cans, special release additives to be added to the layer contacting the fish, are applied. Typical additives to achieve adequate release are wax like materials, e.g. Carnauba wax.

Recently, there has been an increasing interest to use polymer (coil) coated substrates instead of packaging steel with a layer of lacquer, especially also in food packaging, for example polymer coated metal strip or polymer coated paper (board). Commonly applied resins for such applications are polyesters, e.g. polyethylene terephthalate (PET). However, polyesters have poor release properties, thereby limiting the scope of their use in packaging especially where good product release properties are required, such as in e.g. wide mouth food jars or fish cans.

According to EP 1086808 which recognises this problem with PET coatings, a wax component is to be added to such a PET coating to obtain better "taking-out property" of stuffed food contents, see table 1 C2, table 2 C2 and table 3 E1-E16 and C1-C3. However, adding the waxes is expensive firstly because of the cost of such waxes and secondly because of complications in the handling and processing of the manufacture of the non-sticking polymer. Furthermore, in some cases, the use of a wax must be limited in connection with food quality and legislation issues.

Alternatively, according to EP 1086808, see table 1 E1-E7, table 2 E1-E12, C1 and C3-C4 and table 3 C4-C5, for better "taking-out property" a coating of an apolar resin, viz. (mixtures of) a polypropylene (PP) and/or polyethylene (PE) or polytetrafluorethylene (PTFE) optionally provided with an extra layer of modified PP could be applied to the metal strip. However, it is known that these coatings are not suitable for many packaging applications, notably for foodstuffs that are sterilised or heat-treated in the packaging.

In applications where these apolar resin polymer coatings are not suitable, and where it is also undesirable to have to add waxes to a PET coating, an alternative is thus desired.

It is thus an objective to find a polymer material with a new combination of acceptable and favourable properties in order to reduce or solve the problem of stickiness of a polyester without a need to add waxes to the polyester, and/or to obtain other advantages.

According to the invention this objective is achieved by using a polymer material made from a blend of a polyester resin and an apolar resin such as a polyolefin.

Surprisingly, it turns out that by using such a blended material of a polyester and an apolar resin, e.g. a apolar resin such as PP or PE, which polyester and apolar resin are in principle incompatible with each other, the release properties of the resulting polymer are greatly improved without thereby unacceptably adversely affecting other properties such as the manufacturability and processability of the polymer. Also, surprisingly, the incompatibility of the two polymers does not lead to an unacceptable loss of retort resistance and adhesion, in contrast to what is reported in literature, where generally poor mechanical and barrier properties are reported (see for example Dimitrova *et al.,* Polymer, 41, **2000**, 4817-4824).

In hindsight, the good release properties or non-stick behaviour may be related to demixing of the polymers taking place. According to this theory the demixing results in a morphology where apolar resins such as polyolefins are dispersed in a polar polyester matrix, making the surface less polar and thereby decreasing the affinity of the coating towards sticky products such as many foodstuffs.

The blending of polyester resin with the apolar resin e.g. PP can be applied in the complete polymer material, e.g. for blow, compression or injection moulded products, extruded films, sheets or coatings or only in a single (sub) layer, e.g. a food contact layer of a polymer film, sheet or coating. For very demanding retort applications, it is advisable to use a multi layer system instead of a two or one layer system. In this way, the functional layer can be kept thin, being favourable for coating integrity during these retort processes.

In all cases, the polymer material according to the invention as compared to polyester material shows improved release properties as well as good retort resistance.

The polymer material can be relatively conveniently produced by feeding the respective polyester and apolar resin granulates directly into a system feeding of an extruder, taking care in the feeding system not to exceed the temperature at which the apolar resin softens or melts.

In an embodiment the apolar resin is PP. This has the advantage that the resulting polymer material is relatively cheap.

In another embodiment the apolar resin is modified PP. This achieves an improved extrusion behaviour believed to be resulting from a better compatibility of the resin with PET compared to unmodified PP.

In a further embodiment the apolar resin is maleic acid anhydride modified PP. In this way also a better interaction with the PET is obtained.

In yet another embodiment the apolar resin is PE. By choosing PE, a simple cheap polymer very similar to PP is used.

In another embodiment the apolar resin is a copolymer comprising PP and PE. This achieves a more amorphous system than the standard PP, which provides even better release characteristics.

In yet another embodiment the apolar resin is EPDM.

In an embodiment the polyester is PET (polyethylene terephthalate) or modified PET (e.g. glycol modification with CHDM and/or terephthalate modification by isophthalate) or PEI (polyethylene isophthalate) or PBT (polybutylene therephthalate) and combinations (blends and/or copolymers) thereof.

Preferably, the polymer material according to the invention is coated on a metal sheet. A metal sheet provided with such a coating has the advantage that it can be used to manufacture metal cans for sticky products, e.g. for canned salmon, while achieving good release from the can after opening.

Likewise, the polymer material may be used as a film suitable to package sticky products, and as a film coated onto metal forming a food can. The metal substrate coated with said polymer material may be produced according to a process, wherein the polymer material is extruded, made into an extrudate or the film, which extrudate or film is applied to the metal sheet. It turns out that a can made from a packaging steel coated with said polymer material has excellent release-from-can-properties as will be shown hereafter by way of some non-limitative examples.

### Example 1.1

In an experiment a two layer polymer film consisting of an adhesion layer and a bulk layer was made using for the bulk layer a standard bottle grade PET granulate representing as reference a pure PET film, and a standard bottle grade PET granulate blended with a standard PP homopolymer MFI 12 granulate at different blend ratios representing variants of the polymer having improved release properties according to the invention.

The polymer film was coated onto a conventional steel substrate (TFS / ECCS) of 0.20 mm (normally designated as T57 CA) and the resulting coated steel sheet was made into straight (non-tapered) food cans ⌀ 65 mm and height 93 mm in a 3-step DRD process using blanks ∅ 198 mm.

The cans were filled with fresh bred atlantic salmon, closed and retorted for 90 minutes in an autoclave at a temperature of 121 °C. The cans were cooled in ambient air and stored at 35 °C for one week.

Then the cans were opened, emptied and the amount of remaining salmon was measured by weight (hereafter also referred to as AR in g/can).

Furthermore, the area covered by the remaining salmon (hereafter also referred to as AC in %) was determined as the average of independent estimations by three different persons, in order to simulate perception by the consumer of the "stickiness" of the walls of the respective cans.

The results are given in table 1.1.

As follows from the results of this experiment, the blended materials of PET with PP show superior performance compared to the PET coated reference cans, the variant containing 10 % showing superior release behaviour.

As discussed in Taguchi (Bulletin of the Japanese Society of Scientific Fisheries 46(3) 369 (1980)), laboratory trials like these may suffer from reproducibility problems which are possibly related to "trivial" factors like the freshness of the fish. In order to check the reproducibility of improvement of the release behaviour if the invention is practiced a second experiment with a different salmon lot was performed.

### Example 1.2

Example 1.1 was repeated with a different batch of salmon. The results are as shown in table 1.2.

Although the results in example 1.2 differ from that of 1.1 the trend in the improvement of the release properties of the can achieved by the invention is the same. It is presumed that "trivial" effects like the inherently varying properties of the salmon already mentioned above cause the differences.

### Example 2.1

In another experiment a three layer polymer film was used, comprising an adhesion layer, a bulk layer and a top layer, using for the bulk layer a standard bottle grade PET and for the top layer a standard bottle grade PET granulate blended with a standard PP granulate at different blend ratios, the rest of the experiment being performed in the same way as in Examples 1.1 and 1.2.

The sterilisation performance (hereafter also referred to as SP) of the polymer film was also considered by sterilising samples of the substrate coated with polymer film with the different top layer variants in salty water (saline test) for 90 minutes at 121 °C in the presence of air, in order to determine whether the invention can be used in practice for packaging products that are retorted.

The results are given in table 2.1.

As follows from the above results, the top layers with approx. 10 % PP in PET show superior release performance and adequate sterilisation performance.

As before, due to the nature of the experiment, the data vary from experiment to experiment. Differences in e.g. the freshness of the fish are found to influence the release behaviour.

Again, in order to check the influence of different batches, a further trial using a three layer polymer film was performed.

### Example 2.2

Example 2.1 was repeated with a different batch of salmon. The results are as shown in table 2.2. Again, the effect of the addition of PP to PET on the release properties was clear.

As release phenomena occur at the surface of the packaging material in contact with the filling, it will be clear that the effects of the invention are not limited to the embodiments of the invention in the examples, in particular regarding the used substrates. In other words the invention lies in realising a relatively uncomplicated polymer layer with good release properties.

**Table 1.1**

| | **AR (g/can)** | **AC (%)** |
|---|---|---|
| PET (reference) | 6.9 | 30 |
| PET (reference) | 4.5 | 15 |
| PET (reference) | 7.9 | 35 |
| PET (reference) | 4.6 | 10 |
| PET (reference) | 5.8 | 35 |
| | | |
| 2% PP in PET | 6.3 | 25 |
| 2% PP in PET | 2.5 | 10 |
| 2% PP in PET | 3.3 | 15 |
| 2% PP in PET | 6.8 | 25 |
| 2% PP in PET | 2.8 | 5 |
| | | |
| 5% PP in PET | 4.5 | 10 |
| 5% PP in PET | 1.8 | 5 |
| 5% PP in PET | 3.7 | 20 |
| 5% PP in PET | 2.3 | 15 |
| 5% PP in PET | 3.7 | 10 |
| | | |
| 10% PP in PET | 2.2 | 10 |
| 10% PP in PET | 1.7 | 10 |
| 10% PP in PET | 1.1 | 5 |
| 10% PP in PET | 3 | 10 |
| | | |
| 25% PP in PET | stable polymer material could not be produced | |
| 30% PP in PET | stable polymer material could not be produced | |
| 40% PP in PET | stable polymer material could not be produced | |

**Table 1.2**

| | **AR (g/can)** | **AC (%)** |
|---|---|---|
| PET (reference) | 6.4 | 35 |
| PET (reference) | 15.8 | 35 |
| PET (reference) | 3.9 | 10 |
| PET (reference) | 6 | 20 |
| PET (reference) | 7.3 | 35 |
| PET (reference) | 9.5 | 65 |
| PET (reference) | 5.9 | 30 |
| PET (reference) | 7 | 30 |
| PET (reference) | 5.3 | 25 |
| PET (reference) | 7.7 | 40 |
| | | |
| 2% PP in PET | 3.7 | 15 |
| 2% PP in PET | 9.6 | 35 |
| 2% PP in PET | 4.4 | 10 |
| 2% PP in PET | 2.6 | 5 |
| 2% PP in PET | 3.4 | 15 |
| 2% PP in PET | 6.4 | 25 |
| 2% PP in PET | 3.6 | 25 |
| 2% PP in PET | 7.5 | 15 |
| 2% PP in PET | 5.1 | 20 |
| 2% PP in PET | 3.6 | 15 |
| | | |
| 10% PP in PET | 6.7 | 20 |
| 10% PP in PET | 4.8 | 10 |
| 10% PP in PET | 4.2 | 10 |
| 10% PP in PET | 7.7 | 15 |
| 10% PP in PET | 2.7 | 5 |
| 10% PP in PET | 1.6 | 5 |
| 10% PP in PET | 6.6 | 20 |
| 10% PP in PET | 10.4 | 45 |
| 10% PP in PET | 5.6 | 40 |
| 10% PP in PET | 4.4 | 5 |

**Table 2.1**

| **top layer modification** | **AR (g/can)** | **AC (%)** | **SP** |
|---|---|---|---|
| PET (reference) | 6.4 | 35 | excellent |
| PET (reference) | 15.8 | 35 | |
| PET (reference) | 3.9 | 10 | |
| PET (reference) | 6 | 20 | |
| PET (reference) | 7.3 | 35 | |
| PET (reference) | 9.5 | 65 | |
| PET (reference) | 5.9 | 30 | |
| PET (reference) | 7 | 30 | |
| PET (reference) | 5.3 | 25 | |
| PET (reference) | 7.7 | 40 | |
| | | | |
| 10% PP in PET | 6.7 | 25 | adequate |
| 10% PP in PET | 7.4 | 25 | |
| 10% PP in PET | 3.7 | 15 | |
| 10% PP in PET | 1.4 | 5 | |
| 10% PP in PET | 3.9 | 10 | |
| 10% PP in PET | 10.2 | 40 | |
| 10% PP in PET | 5.9 | 15 | |
| 10% PP in PET | 3.5 | 15 | |
| 10% PP in PET | 4 | 15 | |
| 10% PP in PET | 4.5 | 15 | |

**Table 2.2**

| **top layer modification** | **AR (g/can)** | **AC (%)** | **SP** |
|---|---|---|---|
| PET (reference) | 4.8 | 5 | excellent |
| PET (reference) | 16.7 | 30 | |
| PET (reference) | 2.7 | 5 | |
| PET (reference) | 6.6 | 20 | |
| PET (reference) | 2.8 | 5 | |
| PET (reference) | 4.3 | 10 | |
| PET (reference) | 3.4 | 10 | |
| PET (reference) | 1.9 | 5 | |
| PET (reference) | 2.9 | 5 | |
| PET (reference) | 2.1 | 5 | |
| | | | |
| 5% PP in PET | 2.2 | 10 | excellent |
| 5% PP in PET | 4.1 | 10 | |
| 5% PP in PET | 14 | 20 | |
| 5% PP in PET | 1.6 | 5 | |
| 5% PP in PET | 2.8 | 10 | |
| 5% PP in PET | 2.5 | 10 | |
| 5% PP in PET | 2 | 5 | |
| 5% PP in PET | 5.2 | 15 | |
| 5% PP in PET | 2.4 | 5 | |
| 5% PP in PET | 1.7 | 5 | |
| | | | |
| 10% PP in PET | 3.7 | 10 | adequate¹ |
| 10% PP in PET | 2.3 | 5 | |
| 10% PP in PET | 4.2 | 10 | |
| 10% PP in PET | 3.8 | 10 | |
| 10% PP in PET | 8.9 | 25 | |
| 10% PP in PET | 1.8 | 5 | |
| 10% PP in PET | 3.7 | 10 | |
| 10% PP in PET | 2.8 | 10 | |
| | | | |
| 15% PP in PET | 2 | 5 | |
| 15% PP in PET | 2 | 5 | |
| | | | |
| ¹ Surprisingly, SP at 15 % PP in PET is better than at 10 % PP in PET | | | |
| 15% PP in PET | 2.5 | 5 | good¹ |
| 15% PP in PET | 1.6 | 5 | |
| 15% PP in PET | 2.2 | 5 | |
| 15% PP in PET | 3.2 | 5 | |
| 15% PP in PET | 4.2 | 10 | |
| 15% PP in PET | 3.2 | 5 | |
| 15% PP in PET | 2.4 | 5 | |
| 15% PP in PET | 1.7 | 5 | |
| 15% PP in PET | 1.9 | 5 | |

## Claims

1. Use of a polymer material made from a blend of a polyester resin and an apolar resin such as a polyolefin, as a material having improved non-stick properties as compared to a polymer material made from essentially the polyester resin.

2. Use according to claim 1, wherein the apolar resin is PP.

3. Use according to any of the preceding claims, wherein the apolar resin is modified PP.

4. Use according to claim 3, wherein the apolar resin is maleic acid anhydride modified PP.

5. Use according to claim 1, wherein the apolar resin is a PE.

6. Use according to claim 1, wherein the apolar resin is a copolymer comprising PP and PE.

7. Use according to claim 6, wherein the apolar resin is EPDM.

8. Use according to any of the preceding claims, wherein the polyester is PET or modified PET or PEI or PBT and combinations thereof.

9. Use according to any one of the preceding claims wherein the material is in the form of a film suitable to package a sticky product in a retortable packaging.
